# EUROPÄISCHE PATENTSCHRIFT

(11) **EP 3 635 244 B1**
(45) Veröffentlichungstag und Bekanntmachung des Hinweises auf die Patenterteilung: **06.04.2022**
(21) Anmeldenummer: 18722540.4
(22) Anmeldetag: 07.05.2018
(51) Int. Cl.: F03D 1/06

(54) **ROTORBLATT FÜR EINE WINDENERGIEANLAGE UND WINDENERGIEANLAGE**
ROTOR BLADE FOR A WIND TURBINE AND WIND TURBINE
PALE D'ÉOLIENNE ET ÉOLIENNE

(30) Priorität: 09.06.2017 DE 102017112742
(43) Veröffentlichungstag der Anmeldung: 15.04.2020
(73) Patentinhaber: Wobben Properties GmbH, 26607 Aurich (DE)
(72) Erfinder: ALTMIKUS, Andree, 26605 Aurich (DE)
(74) Vertreter: Eisenführ Speiser
(86) Internationale Anmeldenummer: PCT/EP2018/061660
(87) Internationale Veröffentlichungsnummer: WO 2018/224225

(56) Entgegenhaltungen:
- WO-A1-2007/035758
- DE-A1-102011 056 108
- US-A1- 2011 142 638
- US-A1- 2011 206 507

## Beschreibung

Die Erfindung bezieht sich auf ein Rotorblatt für eine Windenergieanlage, mit einem Innenblattabschnitt, der sich ausgehend von einer Rotorblattwurzel in Längsrichtung des Rotorblattes erstreckt, einem an dem Innenblattabschnitt angeordneten Hinterkantensegment zur Vergrößerung der Profiltiefe des Rotorblattes entlang eines Abschnittes in Rotorblatt-Längsrichtung, wobei das Rotorblatt eine druckseitige Fläche und eine saugseitige Fläche aufweist, die jeweils bereichsweise aus Teilen des Innenblattabschnittes und des Hinterkantensegmentes ausgebildet sind. Weiterhin bezieht sich die Erfindung auf eine Windenergieanlage mit einem Turm, einer Gondel und einem Rotor sowie auf einen Windpark.

Im Stand der Technik ist es bekannt, die Effizienz einer Windenergieanlage über das Design der Rotorblätter an einer Windenergieanlage zu verbessern. Eine Möglichkeit die Effizienz bzw. Leistungsfähigkeit der Windenergieanlage zu steigern, ist das Profil des Rotorblattes im Bereich der Rotorblattwurzel mit großer Profiltiefe auszugestalten. Die Profiltiefe, unter der im Folgenden die Länge des Profils im Wesentlichen senkrecht zur Rotorblattlängsrichtung, also der Abstand zwischen einer Profilnase und einer Profilhinterkante des Rotorblattes verstanden wird, ist dazu möglichst groß auszuführen. Die Rotorblattwurzel bezeichnet den Bereich des Rotorblattes, mit dem das Rotorblatt an der Rotornabe der Windenergieanlage befestigt wird. Häufig liegt die maximale Profiltiefe bei einem solchen Rotorblatt sehr nahe der Rotorblattwurzel. Damit werden Wirbelerzeugungen reduziert und die Effizienz der Windenergieanlage gesteigert. Beispielsweise durch Transportbeschränkungen sind der maximalen Profiltiefe Grenzen gesetzt.

Eine weitere Möglichkeit der Effizienzsteigerung besteht in einer Grenzschichtbeeinflussung, die aufgrund der zunehmenden Profiltiefen immer mehr an Bedeutung erlangt. Auf der Saugseite des Rotorblattes läuft, aufgrund der im allgemeinen konvexen Wölbung der saugseitigen Fläche, die Luftströmung nach Passieren der maximalen Wölbung im hinteren Bereich des Rotorblattprofils gegen einen Druckgradienten. Das bewirkt eine Verlangsamung der Luftströmung, wodurch die Grenzschicht kinetische Energie verliert. Unter Umständen hat die Verlangsamung der Luftströmung zur Folge, dass sich die Grenzschicht von der Oberfläche des Rotorblattes beginnt abzulösen. Eine von der Rotorblattoberfläche abgelöste Strömung hat Turbulenzen zur Folge, wodurch der auf der Saugseite produzierte Auftrieb absinkt und sich damit der Widerstand erhöht. Mit der Grenzschichtbeeinflussung soll insbesondere das Ablösen der Luftströmung von der Oberfläche des Rotorblattes vermieden werden.

Aus dem Stand der Technik, wie beispielsweise der DE 10 2011 050 661 A1 ist es bekannt, insbesondere zur Einhaltung von Transportmaßen, die Hinterkante im Wurzelbereich des Rotorblattes stumpf auszubilden. Im Bereich der Hinterkante wird eine Grenzschichtabsaugung in Form einer Reihe von entlang der Hinterkante verlaufenden Bohrungen vorgesehen. Durch einen innerhalb des Rotorblattes in Längsrichtung verlaufenden Luftleitkanal wird die abgesaugte Luft von der Blattwurzel in Richtung der Blattspitze transportiert und durch einen Ausblasbereich an der Hinterkante der Blattspitze abgegeben. Hierzu kommen innerhalb des Luftleitkanals angeordnete Fördermittel zur Anwendung, welche die abgesaugte Luft aktiv fördern. Diese Anordnung ist umständlich und erfordert sowohl das Vorsehen technisch komplexer Lufteinlässe an der Hinterkante, die leicht die Stabilität gefährden, sowie das Bereitstellen von wenigstens einem Luftleitkanal. Außerdem erfolgt die Grenzschichtbeeinflussung nicht an dem Punkt der Saugseite, an dem ein Ablösen der Grenzschicht auftritt.

WO 2014/064626 A2 offenbart einen aerodynamischen Ansatz für ein Windenergieanlagenrotorblatt, der so gestaltet ist, dass er an den inneren Abschnitt und den Zwischenabschnitt des Windenergieanlagenrotorblattes passt, und eine Hinterkante auf der Druckseite, eine Saugseite und mindestens ein Kanal, der die Druckseite fluidisch mit der Saugseite verbindet, aufweist.

DE 10 2014 205 016 A1 betrifft ein Rotorblatt einer Windenergieanlage mit einem Rotor, der insbesondere eine im Wesentlichen horizontale Drehachse aufweist, wobei das Rotorblatt eine Rotorblattschale mit einer Saugseite und einer Druckseite aufweist und sich von einem wurzelseitigen Ende bis zu einer Rotorblattspitze erstreckt, wobei das Rotorblatt zudem ein Profil aufweist, wobei das Profil eine Profilsehne definiert, die sich von einer Rotorblattnase zu einer Rotorblatthinterkante erstreckt. Das Rotorblatt zeichnet sich dadurch aus, dass eine verschließbare Luftströmungsvorrichtung vorgesehen ist, die ein Verschlusselement in der Rotorblattschale vorsieht, wobei zum Vorsehen einer ergänzenden Luftströmung zu einer auf der Saugseite und/oder Druckseite vorherrschenden Luftströmung das Verschlusselement geöffnet ist oder wird.

DE 10 2011 056 108 A1 beschreibt ein Windkraftanlagen-Blatt, das ein in der Saugseite definiertes durchlässiges Fenster enthält. Das durchlässige Fenster enthält mehrere darin definierte Locher. Ein Luftverteiler in dem Innenhohlraum des Blattes steht mit dem durchlässigen Fenster in Luftstromverbindung. Ein Einlassluftkanal in der Druckseite des Blattes steht mit dem Luftverteiler in Verbindung. Ein verschiebbares Abdeckelement ist angrenzend an das durchlässige Fenster ausgestaltet und ist variabel von einer vollständig geschlossenen Position, in welcher der Luftstrom durch die Locher des durchlässigen Fensters blockiert ist, in eine vollständig offene Position, in welcher ein Luftstrom durch die Locher des durchlässigen Fensters aufgebaut wird, verschiebbar.

US 2016/0177922 A1 beschreibt Hinterkantendüsen an einem Windenergieanlagenrotorblatt zur Lärmminderung, wobei eine oder mehrere Luftdüsen jeweilige Luftstrahlen erzeugen, die radial von einer stumpfen Hinterkante eines Windenergieanlagenrotorblattes abgewinkelt sind. Die Strahlen erzeugen und halten einen radial fließenden Luftstrom entlang der Hinterkante, der die Wirbelablösung löscht. Dies reduziert den Widerstand und das Geräusch, wodurch die Blätter eine umfangreiche stumpfe Hinterkante haben können, was den Widerstand gegen Knicken erhöht und somit längere Blätter ermöglicht. Die Strahlen können durch Luftströmung von einem Lufteinlass in einer Rotorblattkammer oder einem Staulufteinlass oder einem Kompressor geliefert werden. Jede Düse kann einzeln und/oder einzeln oder als Gruppenventil dosiert werden, um eine bestimmte Luftströmung zu jeder Düse relativ zu den anderen Düsen bereitzustellen. Die Gesamtluftströmung zu den Düsen kann als Reaktion auf Umgebungsbedingungen moduliert werden und kann weiter zyklisch als Reaktion auf einen Azimutwinkel des Rotorblattes moduliert werden

US 2011/0206507 A1 beschreibt ein Luftverteilungssystem zum Manipulieren einer Luftgrenzschicht über ein Rotorblatt einer Windkraftanlage. Das Rotorblatt der Windkraftanlage enthält mindestens eine Seitenwand, die einen Hohlraum darin definiert. Die Seitenwand erstreckt sich zwischen einer Vorderkante und einer axial beabstandeten Hinterkante und definiert eine Sehnenachse zwischen der Vorderkante und der Hinterkante. Das Luftverteilungssystem umfasst mehrere Entlüftungsströmungsanordnungen, die innerhalb des Rotorblatts positioniert sind und so konfiguriert sind, dass sie Luft in die Grenzschicht ablassen, um eine Trennung der Grenzschicht vom Rotorblatt zu verringern. Jede Entlüftungsströmungsanordnung der mehreren Entlüftungsströmungsanordnungen umfasst eine Entlüftungsströmungsleitung, die mit einer Innenfläche der Seitenwand gekoppelt ist und in Bezug auf die Sehnenachse zwischen der Vorderkante und der Hinterkante ausgerichtet ist. Die Entlüftungsleitung ist so konfiguriert, dass Luft durch das Rotorblatt geleitet wird. Eine Einlassöffnung wird durch die Entlüftungsleitung und durch die Seitenwand definiert, um Luft in die Entlüftungsleitung zu leiten.

US 2011/0142638 A1 beschreibt ein Rotorblatt einer Windkraftanlage, welches eine Druckseite und eine Saugseite umfasst. Durch die Schaufel ist zwischen Druckseite und Saugseite mindestens ein Schaufelblattdurchgang definiert. Über dem Schaufelblattdurchgang ist an jeder Druck- und Saugseite eine entsprechende Abdeckung konfiguriert. Die Abdeckungen sind zwischen einer geschlossenen Position, in der die Abdeckung bündig mit der jeweiligen Druck- oder Saugseite ist, und einer offenen Position betätigbar, in der sich die Abdeckung bewegt, um den Tragflächenkanal zu öffnen.

Der Erfindung liegt die Aufgabe zugrunde, ein Rotorblatt der vorbezeichneten Gattung dahingehend zu verbessern, dass eine vereinfachte und effizientere Grenzschichtbeeinflussung erreicht wird.

Die der Erfindung zugrundeliegende Aufgabe wird bei einem Rotorblatt für eine Windenergieanlage mit den Merkmalen nach Anspruch 1 gelöst. Hierzu sind auf der druckseitigen Fläche und auf der saugseitigen Fläche des Rotorblattes im Bereich des Hinterkantensegmentes jeweils wenigstens ein sich im Wesentlichen in Rotorblatt-Längsrichtung erstreckender Lufteinlass und Luftauslass ausgebildet, welche miteinander fluidleitend verbunden sind, wobei auf der saugseitigen Fläche zumindest ein den wenigstens einen Luftauslass überlappendes Abdeckelement angeordnet ist, durch welches der wenigstens eine Luftauslass verschließbar oder freigebbar ist.

Die Erfindung macht sich hierbei die Erkenntnis zunutze, das mit Hilfe eines, insbesondere schlitzartigen, Luftein- und Luftauslasses auf der druckseitigen und saugseitigen Fläche des Rotorblattes zumindest ein Absaug- und Ausblasbereich ausgebildet ist, mit dem eine in Richtung der Profiltiefe des Rotorblattes strömende Grenzschicht vorteilhaft beeinflusst wird. Die aus dem Luftauslass ausströmende Luft trägt zur Erhöhung der kinetischen Energie in der Grenzschichtströmung bei. Dadurch wird zu einer Überwindung des Druckanstieges nach Passieren der maximalen Wölbung im hinteren Bereich des Rotorblattprofils beigetragen. Besonders vorteilhaft ist dabei, dass das Ausblasen durch eine passive Betätigung des Abdeckelementes erfolgt. Mit beginnender Ablösung der Grenzschichtströmung auf der saugseitigen Fläche des Rotorblattes gibt das Abdeckelement den Luftauslass frei. Darüber hinaus wird durch das Abdeckelement ein aerodynamischer Kurzschluss durch die fluidleitende Kopplung des auf den voneinander abgewandten Seiten des Rotorblattes angeordneten Lufteinlasses und Luftauslasses verhindert. Im Betrieb der Windenergieanlage entsteht durch die fluidleitende Kopplung eine selbsttätig strömende Luftströmung vom Lufteinlass auf der Druckseite zum Luftauslass auf der Saugseite des Rotorblattes. Das Abdeckelement verhindert ein unkontrolliertes Ausblasen bzw. Ausströmen, was den Auftrieb reduzieren und den Widerstand erhöhen würde.

Somit lässt sich die Profiltiefe des Rotorblattes im Rotorwurzelbereich durch die Anordnung von zumindest einem Hinterkantensegment effektiv vergrößern. Die Erstreckung des zumindest einen Hinterkantensegmentes beträgt bis zu einem Drittel der Länge des Rotorblattes. Eine Vollausprofilierung dieses Bereiches des Rotorblattes trägt, kumulativ über die Lebensbetriebsdauer der Windenergieanlage, gerade bei niedrigen mittleren Geschwindigkeiten erheblich zum Jahresenergieertrag (AEP) der Windenergieanlage bei.

Vorzugsweise weist der Innenblattabschnitt einen runden bzw. ovalen Profilschnitt auf, der eine einfache Fertigung und Befestigung an der Rotornabe ermöglicht. Durch das Hinterkantensegment wird auch in diesem Abschnitt, in dem der Profilschnitt rund bzw. oval ist, eine aerodynamische Wirkung erreichbar.

Im Vergleich zu einer Grenzschichtabsaugung im Bereich der Hinterkante, eventuell sogar eines an der Hinterkante angeordneten Hinterkantensegmentes, wird die Luftströmung in dem Bereich des Rotorblattes beeinflusst, in dem sie den größten Effekt erzielt, nämlich in dem Bereich der beginnenden Ablösung der Grenzschicht. Überdies sind keine Bohrungen oder strukturellen Veränderungen an dem Innenblattabschnitt erforderlich, die Stabilitätsprobleme verursachen können.

Unter einem schlitzartigen Lufteinlass und Luftauslass ist ein Schlitz oder Spalt in der Oberfläche des Rotorblattes auf dessen druckseitiger und saugseitiger Fläche zu verstehen, dessen Abmessung in Rotorblatt-Längsrichtung größer ist als in Richtung der Profiltiefe. Bevorzugt sind die Abmessungen der Lufteinlässe und Luftauslässe in Rotorblatt-Längsrichtung um ein Vielfaches größer als in Richtung der Profiltiefe. In einer Ausführungsform ist die Abmessung in Rotorblatt-Längsrichtung mindestens zweimal so groß wie die Abmessung in Richtung der Profiltiefe. In einer anderen Ausführungsform ist die Abmessung in Rotorblatt-Längsrichtung mindestens 10 mal größer, insbesondere mindestens 20 mal größer, besonders bevorzugt mindestens 50 mal größer als die Abmessung in Richtung der Profiltiefe.

Hierbei können der wenigstens eine Lufteinlass und Luftauslass durch das Hinterkantensegment fluidleitend miteinander verbunden sein. Das sich an den Innenblattabschnitt anschließende Hinterkantensegment kann hierzu einen umschlossenen Raum ausbilden, in welchen durch den Lufteinlass Luft einströmt.

Dabei kann das zumindest eine Abdeckelement in Abhängigkeit von einem sich im Inneren des Hinterkantensegmentes einstellenden Staudruck betätigbar sein.

Das zumindest eine Abdeckelement ist dazu eingerichtet, die Luftströmung im Bereich des Luftauslasses im Wesentlichen parallel zur jeweils angrenzenden äußeren Oberfläche des Innenblattabschnittes umzulenken. Durch das Umlenken erfolgt bevorzugt das Abgeben bzw. Ausblasen der Luftströmung vorzugsweise in Richtung der entlang der saugseitigen Fläche des Rotorblattes strömenden Luftströmung. Damit wird die Grenzschicht auf der sauseitigen Fläche des Rotorblattes auf vereinfachte Weise beeinflusst.

Vorzugsweise ist in einer Ausführungsform der Erfindung vorgesehen, dass das zumindest eine Abdeckelement einen ersten Abschnitt aufweist, mit welchem das zumindest eine Abdeckelement an dem Innenblattabschnitt befestigt ist, sowie einen zweiten Abschnitt, welcher den wenigstens einen Luftauslass überlappt. Der erste, der Befestigung dienende, Abschnitt kann hierzu eine an die Kontur des Innenblattabschnittes angepasste Oberfläche aufweisen. Hierdurch können störende Einflüsse auf die Luftströmung weitgehend vermieden werden. Zudem lässt sich ein solches Abdeckelement in einfacher Weise montieren. Der zweite Abschnitt kann den Luftauslass in Rotorblattlängsrichtung ganz oder teilweise überlappen.

Dabei kann zumindest der zweite Abschnitt des zumindest einen Abdeckelementes biegeelastisch ausgeführt sein. Dies hat den Vorteil, dass sich das Verschließen und Freigeben des Luftauslasses in Abhängigkeit von der Federsteifigkeit des zur Herstellung des Abdeckelementes verwendeten Materiales steuern lässt.

Gemäß einer alternativen Ausgestaltung kann das zumindest eine Abdeckelement zweiteilig ausgebildet sein. Dabei können der erste Abschnitt und der zweite Abschnitt zumindest abschnittsweise durch ein Gelenk miteinander verbunden sein. Das Verschließen und Freigeben des Luftauslasses kann durch das Eigengewicht des zweiten Abschnittes beeinflusst werden. Alternativ oder zusätzlich kann zur Steuerung des Ansprechverhaltens des dem Verschließen und Freigeben des Luftauslasses dienenden zweiten Abschnitts das Gelenk federbelastet ausgeführt sein.

Eine Weiterbildung des erfindungsgemäßen Rotorblattes sieht vor, dass jeder Lufteinlass und Luftauslass unmittelbar im Übergangsbereich vom Innenblattabschnitt zum Hinterkantensegment ausgebildet ist. Die einen Bereich der saugseitigen Fläche ausbildende Oberseite und die einen Bereich der druckseitigen Fläche des Rotorblattes ausbildende Unterseite des Hinterkantensegmentes werden zum Innenblattabschnitt hin auf einfache Weise verkürzt ausgebildet. Dadurch entsteht eine Unterbrechung in der saugseitigen und druckseitigen Fläche des Rotorblattes durch eine am Innenblattabschnitt zurückspringende Kante an Ober- und Unterseite des Hinterkantensegmentes. Beim Ansetzen des Hinterkantensegmentes an den Innenblattabschnitt sind die Kanten von Ober- und Unterseite des Hinterkantensegmentes somit im Abstand zu einem jeweils zugeordneten Bereich des Innenblattabschnittes angeordnet.

Ferner kann das Hinterkantensegment demnach eine erste Kante und eine zweite Kante aufweisen, welche die druckseitige und saugseitige Fläche des Hinterkantensegmentes begrenzen. Die erste Kante und die zweite Kante weisen vorzugsweise einen im Wesentlichen tangentialen Verlauf zur Oberfläche des Innenblattabschnittes auf. Vorzugsweise sind die erste und die zweite Kante von dem Innenblattabschnitt beabstandet, so dass sich der Lufteinlass bzw. der Luftauslass dazwischen ausbildet.

Der Abstand zwischen der ersten Kante bzw. der zweiten Kante und dem Innenblattabschnitt kann unterschiedlich ausgeführt sein. Bevorzugt ist der Abstand der ersten Kante größer als der Abstand der zweiten Kante zum Innenblattabschnitt. Hierdurch bildet sich auf der druckseitigen Fläche des Hinterkantensegmentes ein den Lufteinlass ausbildender breiterer Spalt aus. Dies führt zu einer Erhöhung des Volumenstroms respektive der Steigerung der Ausströmgeschwindigkeit am Luftauslass.

Weiterhin kann das Hinterkantensegment einen an der ersten Kante angeordneten Vorderkantenabschnitt aufweisen, welcher sich abschnittsweise in Umfangsrichtung des Innenblattabschnitts erstreckt. Der Vorderkantenabschnitt bildet einen Einlauf zur Staudruck-Rückgewinnung aus. Diese Maßnahme führt zu einer Steigerung des Volumenstroms respektive der Ausströmgeschwindigkeit am Luftauslass.

Vorzugsweise ist in einer Ausführungsform der Erfindung vorgesehen, dass das Hinterkantensegment aus zumindest einem sich abschnittsweise in Umfangsrichtung des Innenblattabschnittes erstreckenden Konturelement und zumindest einem unter einem Winkel zum Konturelement auf der saugseitigen Fläche angeordneten Profilelement gebildet ist. Das Profilelement weist vorzugsweise einen gekrümmten Verlauf auf.

Dabei kann das Konturelement mittels auf der Oberfläche des Innenblattabschnittes angeordneten Stegen zu dieser radial beabstandet befestigbar sein. Hierzu kann das Konturelement an die äußere Form des Innenblattabschnittes angepasst sein. Auf diese Weise bildet sich wenigstens ein Strömungskanal zwischen dem Innenblattabschnitt und dem Konturelement aus, welcher den Lufteinlass auf der druckseitigen Fläche mit dem Luftauslass auf der saugseitigen Fläche fluidleitend verbindet.

Ferner kann zwischen dem Konturelement und dem Profilelement zumindest ein Verbindungselement angeordnet beziehungsweise ausgebildet sein. Je nach Ausgestaltung des zumindest einen Verbindungselementes können diesem unterschiedliche Funktionen zukommen. So kann das zumindest eine Verbindungselement der gleichbleibenden Beabstandung von Konturelement und Profilelement dienen. Darüber hinaus kann das zumindest eine Verbindungselement der Beeinflussung der Luftströmung in diesem Bereich dienen. Das zumindest eine Verbindungselement kann sich zwischen der Oberfläche des Konturelementes und der dieser zugewandten Unterseite des Profilelementes erstrecken. Dabei kann das zumindest eine Verbindungselement eine im Wesentlichen längliche Gestalt aufweisen, so dass das zumindest eine Verbindungselement lediglich im Bereich seiner äußeren Enden mit dem Konturelement und dem Profilelement verbunden ist. Hierzu kann das Verbindungselement beispielsweise stab- oder stangenförmig ausgeführt sein. Des Weiteren kann das zumindest eine Verbindungselement zumindest in der zu dem Konturelement und dem Profilelement orthogonalen Ebene flächig ausgebildet sein und einen polygonalen Umriss aufweisen. Dabei liegt eine jeweils dem Konturelement bzw. dem Profilelement zugewandte Außenkante des Verbindungselementes linienförmig an. So kann das Verbindungselement beispielsweise als ein Dreieckssteg oder ein Rippenkörper ausgebildet sein. Darüber hinaus kann das zumindest eine Verbindungselement als ein Rosendornprofil ausgebildet sein. Aufgrund einer solchen Dornerweiterung lässt sich nicht nur die Profiltiefe im Nabenbereich vorteilhaft gering gestalten, sondern darüber hinaus auch eine Wirbelablösung und damit die Schallemission vorteilhaft beeinflussen.

Weiterhin kann das Profilelement als ein mittels einer Aufwickelvorrichtung aufwickelbares Flächensegment ausgebildet sein, welches über einer an dem Konturelement angeordneten Lattung aufspannbar ist. Vorteilhaft ist die Aufwickelvorrichtung in das Hinterkantensegment integriert. Die aufwickelbare Ausgestaltung des Profilelementes hat den Vorteil, dass der Transport aufgrund verringerter Abmessungen vereinfacht wird. Bei der Installation lässt sich dann das als Flächensegment ausgebildete Profilelement ausziehen und mittels der konturgebenden Lattung aufspannen.

Zur Erhöhung der Stabilität können zwischen der Lattung und dem Konturelement ein oder mehrere Rippenkörper vorgesehen sein. Vorzugsweise wird der Rippenkörper mittels einer Kraftschlussverbindung oder einer Stoffschlussverbindung mit den entsprechend zugeordneten Flächenbereichen von Lattung und Konturelement verbunden.

Die Erfindung betrifft des Weiteren eine Windenergieanlage mit einem Turm, einer Gondel und einem Rotor. Die Erfindung löst auch die bei dem erfindungsgemäßen Rotorblatt zugrunde gelegte Aufgabe, indem ein mit dem Rotor verbundenes Rotorblatt nach einer der vorstehend beschriebenen bevorzugten Ausführungsformen der Erfindung ausgebildet ist. Mit einem solch erfindungsgemäß ausgebildeten Rotorblatt ist eine Grenzschichtbeeinflussung am Rotorblatt möglich, wodurch die Effizienz der Windenergieanlage auf einfache Weise verbessert werden kann.

Des Weiteren betrifft die Erfindung auch einen Windpark mit mehreren Windenergieanlagen, welche gemäß einer der vorstehend beschriebenen bevorzugten Ausführungsformen der Erfindung ausgebildet sind.

Die Erfindung wird im Folgenden anhand eines möglichen Ausführungsbeispiels unter Bezugnahme auf die beigefügten Figuren näher beschrieben. Hierbei zeigen:
- Fig. 1:: eine Windenergieanlage gemäß der vorliegenden Erfindung;
- Fig. 2:: eine Schnittansicht eines erfindungsgemäßen Rotorblattes im Rotornaben1bereich gemäß einem ersten Ausführungsbeispiel;
- Fig. 3:: eine Detailansicht II gemäß Fig. 2 in einer ersten Position eines Abdeckelementes;
- Fig. 4:: eine Detailansicht II gemäß Fig. 2 in einer zweiten Position des Abdeckelementes;
- Fig. 5:: eine Schnittansicht eines erfindungsgemäßen Rotorblattes im Rotornabenbereich mit gemäß einem zweiten Ausführungsbeispiel eines Hinterkantensegmentes;
- Fig. 6:: eine Detailansicht II gemäß Fig. 2 in einer ersten Position eines Abdeckelementes gemäß eines weiteren Ausführungsbeispieles;
- Fig. 7:: ein drittes Ausführungsbeispiel eines Hinterkantensegmentes;
- Fig. 8:: eine perspektivische Ansicht eines Innenblattabschnittes;
- Fig. 9:: eine perspektivische Ansicht eines Konturelementes;
- Fig. 10:: ein viertes Ausführungsbeispiel eines Hinterkantensegmentes;

Wenngleich bestimmte Merkmale bevorzugter Ausführungsformen nur bezüglich einzelner Ausführungsbeispiele beschrieben sind, erstreckt sich die Erfindung auch auf die Kombination einzelner Merkmale der unterschiedlichen Ausführungsbeispiele untereinander.

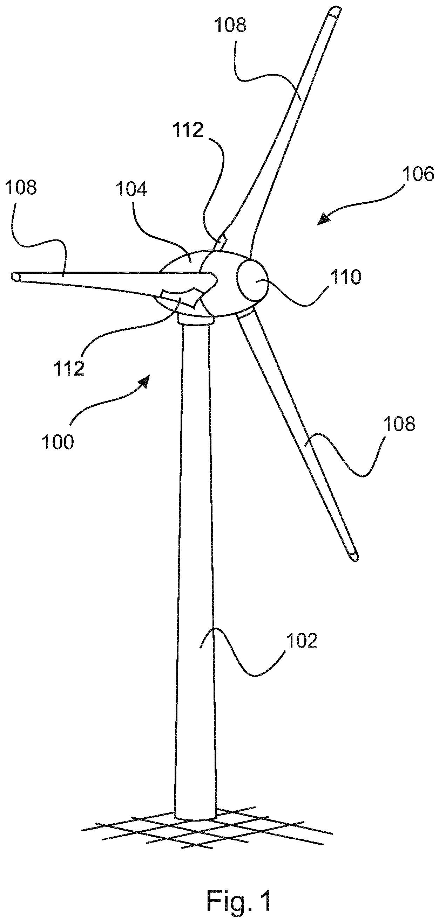

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Die Rotorblätter 108 sind mit ihrer Rotorblattwurzel an einer Rotornabe angeordnet. Der Rotor 106 wird im Betrieb durch den Wind in eine Drehbewegung versetzt und treibt dadurch einen (nicht dargestellten) Generator in der Gondel 104 an.

Die Rotorblätter 108 weisen jeweils ein Hinterkantensegment 112 auf, mittels dessen sie als anschmiegsame Rotorblätter ausgebildet sind. Das zumindest eine Hinterkantensegment 112 erstreckt sich ausgehend von der Rotorblattwurzel abschnittsweise in Längsrichtung des Rotorblattes 108. Die Erstreckung des zumindest einen Hinterkantensegmentes 112 beträgt bis zu einem Drittel der Länge des Rotorblattes 108.

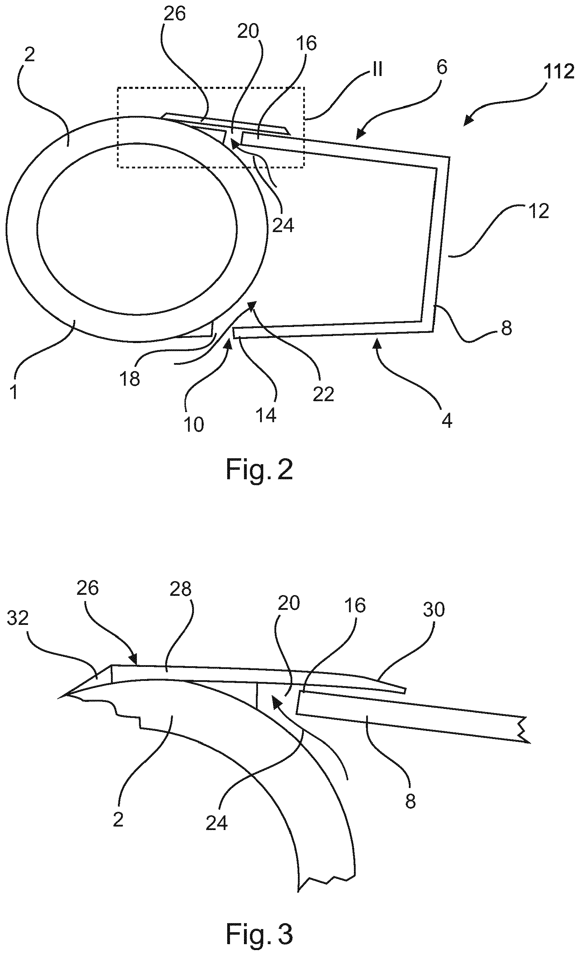

In Fig. 2 ist eine Schnittansicht des Rotorblattes 108 im Rotornabenbereich mit einem Hinterkantensegment 112 gemäß einem ersten Ausführungsbeispiel dargestellt. Das in Fig. 2 dargestellte Rotorblatt 108 weist in einem sich an die Rotorblattwurzel 1 anschließenden Innenblattabschnitt 2 das die Profiltiefe des Rotorblattes 108 verlängernde Hinterkantensegment 112 auf. Das Hinterkantensegment 112 weist eine druckseitige Fläche 4 und eine saugseitige Fläche 6 auf. Das Hinterkantensegment 112 ist in dem dargestellten Ausführungsbeispiel als ein mehrteiliges Profilelemement ausgebildet und weist einen als Fußsegment ausgebildeten Segmentabschnitt 8 mit einem im Wesentlichen Uförmigen Querschnitt auf. Eine im Wesentlichen senkrecht zwischen der saugseitigen und druckseitigen Fläche 4, 6 verlaufende rückwärtige Fläche 12 begrenzt den Segmentabschnitt 8 des Hinterkantensegmentes 112.

Gegenüber der rückwärtigen Fläche 12 befindet sich eine offen ausgeführte Verbindungsseite 10, an welcher das Hinterkantensegment 112 an dem Innenblattabschnitt 2 des Rotorblattes 108 angeordnet ist. Auf der Verbindungsseite 10 des Hinterkantensegmentes 112 verlaufen eine erste Kante 14 und eine zweite Kante 16, welche die saugseitige und druckseitige Fläche 4, 6 des Hinterkantensegmentes 112 begrenzen. Die erste Kante 14 und die zweite Kante 16 sind an die Krümmung des Rotorblattes 108 angepasst und verlaufen im Wesentlichen in Rotorblatt-Längsrichtung. Die erste Kante 14 und die zweite Kante 16 erstrecken sich tangential zur Mantelfläche des Innenblattabschnittes 2 in Richtung der Profiltiefe des Rotorblattes 108. Die rückwärtige Fläche 12 des Segmentabschnittes 8 ist im montierten Zustand auf eine nicht dargestellte Hinterkante des sich an den Innenblattabschnitt 2 anschließenden Bereiches des Rotorblattes 108 ausgerichtet. An die rückwärtige Fläche 10 des Segmentabschnittes 8 schließt sich zumindest ein weiterer Segmentabschnitt an. Der zumindest eine weitere Segmentabschnitt bildet einen Teil der Hinterkante des Hinterkantensegmentes 112.

In dem gezeigten Ausführungsbeispiel endet die erste Kante 14 des Hinterkantensegmentes 112 im Abstand zur äußeren Fläche bzw. Außenkontur des Innenblattabschnittes 2, wodurch ein erster Spalt 18 zwischen der druckseitigen Fläche 4 des Hinterkantensegmentes 112 und des Innenblattabschnittes 2 ausgebildet ist. Durch den ersten Spalt 18, der im Übergangsbereich vom Innenblattabschnitt 2 zum Hinterkantensegment 112 ausgebildet ist, ist ein Absaugen der Grenzschicht auf der druckseitigen Fläche 4 des Rotorblattes 108 möglich. Der erste Spalt 18 bildet einen, insbesondere schlitzartigen, Lufteinlass 22 in das Innere des Hinterkantensegmentes 112 aus.

Auf der saugseitigen Fläche 6 des Hinterkantensegmentes 112 endet die zweite Kante 16 des Hinterkantensegmentes 112 ebenfalls im Abstand zu der äußeren Fläche bzw. der Außenkontur des Innenblattabschnittes 2, wodurch ein zweiter Spalt 20 zwischen der druckseitigen Fläche 4 des Hinterkantensegmentes 112 und des Innenblattabschnittes 2 ausgebildet ist. Durch den zweiten Spalt 20, der im Übergangsbereich vom Innenblattabschnitt 2 zum Hinterkantensegment 112 ausgebildet ist, ist ein Ausströmen des durch den ersten Spalt 18 aufgenommenen Luftstroms auf der saugseitigen Fläche 6 des Rotorblattes 108 möglich. Der zweite Spalt 20 bildet einen, insbesondere schlitzartigen, Luftauslass 24 aus dem Inneren des Hinterkantensegmentes 112 aus. Der erste Spalt 18 und der zweite Spalt 20 sind durch den im Wesentlichen U-förmig ausgebildeten Segmentabschnitt 8 fluidleitend miteinander verbunden.

Der Luftauslass 24 auf der saugseitigen Fläche 6 des Hinterkantensegmentes 112 ist durch zumindest ein Abdeckelement 26 abgedeckt. Das Abdeckelement 26 ist an dem Innenblattabschnitt 2 angeordnet und erstreckt sich abschnittsweise über die saugseitige Fläche 6 des Hinterkantensegmentes 112. Die Ausdehnung des zumindest einen Abdeckelementes 26 in Längsrichtung des Rotorblattes 108 korrespondiert mit den Abmessungen des zweiten Spaltes 20 auf der saugseitigen Fläche 6. Zur Anbringung an dem Innenblattabschnitt 2 weist das Abdeckelement 26 einen ersten als Befestigungsabschnitt 28 ausgebildeten Abschnitt auf. Der von dem zweiten Spalt 20 gebildete Luftauslass 26 wird von einem zweiten als Abdeckabschnitt 30 ausgebildeten Abschnitt des Abdeckelementes 26 überlappt, wie in der Detailansicht in Fig. 3 näher dargestellt ist.

Fig. 3 zeigt eine Darstellung einer Detailansicht II gemäß Fig. 2. Das Abdeckelement 26 ist als ein im Wesentlichen plattenförmiges Profilbauteil ausgeführt. Das der Anströmung zugewandte freie Ende des Befestigungsabschnittes 28 weist einen abgeflachten Übergang zur Oberfläche des Innenblattabschnittes 2 auf. Hierzu ist eine als separates Element ausgeführte Anströmkante 32 vorgesehen, um Verwirbelungen im Übergang zwischen der Oberfläche des Innenblattabschnittes 2 und dem Abdeckelement 26 zu vermeiden. Alternativ kann das freie Ende des Befestigungsabschnittes 28 einen sich verjüngenden Verlauf aufweisen oder es wird mittels einer Ausgleichsmasse ein strömungstechnisch optimierter Übergang geschaffen. Das freie Ende des Abdeckelementes 30 weist ebenfalls einen sich verjüngenden bzw. abflachenden Verlauf auf.

Zumindest der zweite Abschnitt, der Abdeckabschnitt 30, des Abdeckelementes 26 ist aus einem biegeelastischen Material hergestellt. Die Darstellungen in den Fig. 2 und 3 zeigen das Abdeckelement 26 in einer an der Oberfläche des Segmentabschnittes 8 anliegenden Position. In der anliegenden Position ist der Luftauslass 24 verschlossen.

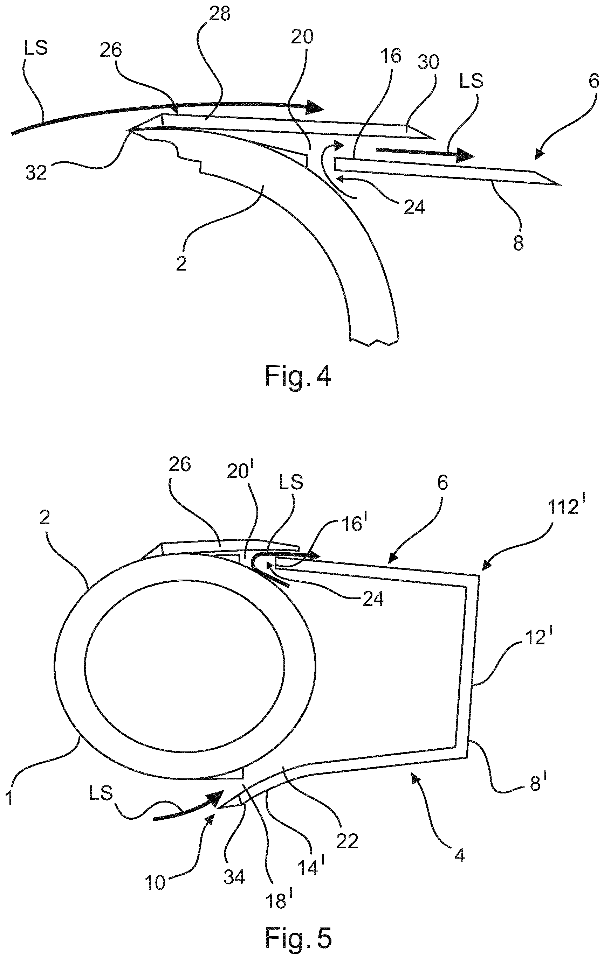

In Fig. 4 ist eine Detailansicht II gemäß Fig. 2 in einer zweiten Position des Abdeckelementes 26 dargestellt. In dieser zweiten Position ist der Abdeckabschnitt 30 durch den sich aufbauenden Staudruck im Inneren des Segmentabschnittes 8 sowie das Ablösen der Grenzschichtströmung auf der saugseitigen Fläche 6 angehoben worden, so dass der Luftauslass 24 freigegeben wird. Dadurch gibt der Abdeckabschnitt 30 den Luftauslass 24 nicht nur frei, sondern lenkt durch seine Ausgestaltung die durch den Luftauslass 24 ausströmende Luft in der Weise um, dass diese in Strömungsrichtung der Luftströmung LS auf der saugseitigen Fläche 6 ausströmt. Hierdurch erfährt die Grenzschichtströmung auf der saugseitigen Fläche 6 eine Energiezufuhr zur Überwindung der zur Strömungsablösung führenden Druckdifferenz. Der Abdeckabschnitt 30 des Abdeckelementes 26 bildet eine Art Überdruckventil. Beim Passieren eines Schwellwertes für den Staudruck im Inneren des Segmentabschnittes 8 geht der Abdeckabschnitt 30 temporär aus einer den Lauftaustritt 24 verschließenden Position in eine den Luftaustritt 24 freigebende Position über. Der Schwellwert des Staudrucks, der zum Öffnen bzw. Freigeben des Luftaustritts 24 führt, lässt sich unter anderem durch die Biegesteifigkeit des für den Abdeckabschnitt 30 verwendeten Materiales variieren. Eine weitere Möglichkeit besteht darin, den Befestigungsabschnitt 28, der mit der Oberfläche des Innenblattabschnittes 2 fest verbunden ist, kürzer auszuführen, so dass sich der Hebelarm des Abdeckabschnittes 30 verlängert.

Die Darstellung in Fig. 5 zeigt ein zweites Ausführungsbeispiel eines Hinterkantensegmentes 112'. Das Hinterkantensegment 112' weist einen als Fußsegment ausgebildeten Segmentabschnitt 8' mit einem im Wesentlichen U-förmigen Querschnitt auf. Eine im Wesentlichen senkrecht zwischen der saugseitigen und druckseitigen Fläche 4, 6 verlaufende rückwärtige Fläche 12' begrenzt den Segmentabschnitt 8' des Hinterkantensegmentes 112'. Auf der Verbindungsseite 10 des Hinterkantensegmentes 112' verlaufen eine erste Kante 14' und eine zweite Kante 16', welche die saugseitige und druckseitige Fläche 4, 6 des Hinterkantensegmentes 112' begrenzen. Dieses zweite Ausführungsbeispiel unterscheidet sich dadurch, dass die erste Kante 14' einen Vorderkantenabschnitt 34 aufweist, welcher einen abschnittsweise gekrümmten Verlauf aufweist. Der Vorderkantenabschnitt 34 ist abschnittsweise in Umfangsrichtung des Innenblattabschnittes 2 verlängert ausgeführt. Dabei überlappt der Vorderkantenabschnitt 34 die Mantelfläche des Innenblattabschnittes 2 partiell. Der Vorderkantenabschnitt 34 ist mit einer sich verjüngenden Spitze ausgebildet, um Verwirbelungen zu reduzieren. Durch den an die Kontur der Mantelfläche des Innenblattabschnittes 2 angepassten Verlauf der ersten Kante 14' in Richtung der Profiltiefe des Rotorblattes 108 wird der erste Spalt 18' respektive Lufteinlass 22 vergrößert. Dies hat den Effekt, dass der in das Innere des Segmentabschnittes 8' zugeführte Luftstrom vergrößert wird. Hierdurch lässt sich ein höherer Staudruck im Inneren des Segmentabschnittes 8' aufbauen. Der durch die Erhöhung des zugeführten Luftvolumenstrom erreichbare höhere Staudruck in dem Segmentabschnitt 8' führt zu einer höheren Ausströmgeschwindigkeit durch den von dem zweiten Spalt 20' gebildeten Luftauslass 24. Die Energiezufuhr in die Grenzschicht auf der saugseitigen Fläche 6 des Hinterkantensegmentes 112' lässt sich dadurch steigern.

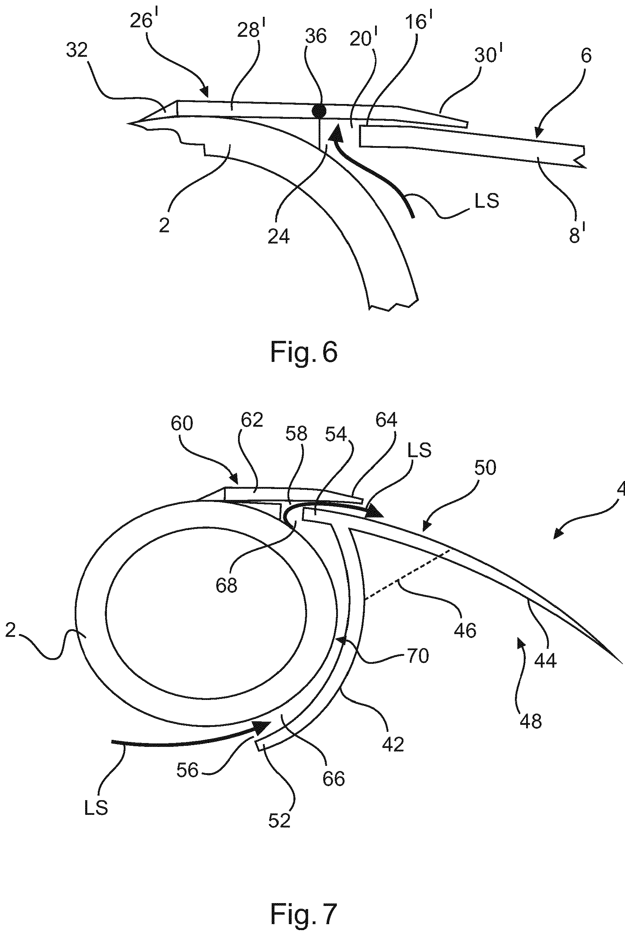

Fig. 6 zeigt eine Detailansicht II gemäß Fig. 2 in einer ersten Position eines Abdeckelementes 26' gemäß eines weiteren Ausführungsbeispieles. Während das Abdeckelement 26 gemäß dem ersten Ausführungsbeispiel einteilig ausgebildet ist, ist das Abdeckelement 26'in der in Fig. 6 dargestellten Ausführungsform mehrteilig ausgeführt. Das Abdeckelement 26' weist einen Befestigungsabschnitt 28' sowie einen Abdeckabschnitt 30' auf. Diese sind miteinander durch ein Gelenk 36 verbunden. Das Ansprechverhalten des Abdeckabschnitts 30' lässt sich durch konstruktive Maßnahmen beeinflussen. Beispielhaft seien eine Federbelastung im Bereich des Gelenks 36 oder das Eigengewicht des Abdeckabschnitts 30' genannt.

In Fig. 7 bis 9 ist ein weiteres Ausführungsbeispiel eines Hinterkantensegmentes 40 dargestellt. Das Hinterkantensegment 40 umfasst ein Konturelement 42 und ein unter einem Winkel zum Konturelement 42 angeordnetes Profilelement 44. Insbesondere kann das Hinterkantensegment 40 mehrteilig ausgebildet sein. Zwischen dem Konturelement 42 und dem Profilelement 44 ist ein als Rosendornprofil 46 ausgeführtes Verbindungselement angeordnet beziehungsweise bildet sich dort ein als Rosendornprofil 46 ausgeführtes Verbindungselement aufgrund der Ausgestaltung von Konturelement 42 und Profilelement 44 aus. Hierbei liegt eine dem Konturelement 42 bzw. dem Profilelement 44 jeweils zugewandte Außenkante des Verbindungselementes linienförmig an dem Konturelement 42 bzw. dem Profilelement 44 an. Des Weiteren kann das zumindest eine Verbindungselement auch als ein Dreieckssteg ausgeführt sein.

Das Hinterkantensegment 40 weist eine druckseitige Fläche 48 und eine saugseitige Fläche 50 auf. Das Konturelement 42 weist eine erste Kante 52 und das Profilsegment 44 eine zweite Kante 54 auf. Die erste Kante 52 verläuft auf der Druckseite des Innenblattabschnittes 2. Die zweite Kante 54 verläuft auf der saugseitigen Fläche 50 des Hinterkantensegmentes 40. Die erste Kante 52 ist im Abstand zur äußeren Fläche bzw. Außenkontur des Innenblattabschnittes 2 angeordnet, wodurch ein erster Spalt 56 zwischen dem Konturelement 42 und dem Innenblattabschnitt 2 ausgebildet ist. Durch den ersten Spalt 56, der im Übergangsbereich vom Innenblattabschnitt 2 zum Hinterkantensegment 40 ausgebildet ist, ist ein Absaugen der Grenzschicht auf der druckseitigen Fläche 48 des Rotorblattes 108 möglich. Der erste Spalt 56 bildet einen, insbesondere schlitzartigen, Lufteinlass 66 aus.

Auf der saugseitigen Fläche 50 endet die zweite Kante 54 des Profilelementes 44 ebenfalls im Abstand zu der äußeren Fläche bzw. der Außenkontur des Innenblattabschnittes 2, wodurch ein zweiter Spalt 58 zwischen der saugseitigen Fläche 50 des Profilelementes 44 und des Innenblattabschnittes 2 ausgebildet ist. Durch den zweiten Spalt 58, der im Übergangsbereich vom Innenblattabschnitt 2 zu dem Hinterkantensegment 40 ausgebildet ist, ist ein Ausströmen des durch den ersten Spalt 56 aufgenommenen Luftstroms auf der saugseitigen Fläche 50 des Rotorblattes 108 möglich. Der zweite Spalt 56 bildet einen, insbesondere schlitzartigen, Luftauslass 68 aus.

Der zweite Spalt 58 wird von einem Abdeckelement 60, welches einen Befestigungsabschnitt 62 und einen Abdeckabschnitt 64 aufweist, überlappt. Dabei ist der Abdeckabschnitt 64 derart ausgebildet, dass dieser den zweiten Spalt 58 respektive den Luftauslass 68 verschließen oder freigeben kann, wie weiter oben bereits ausgeführt wurde. Der Abstand in radialer Richtung zwischen der äußeren Fläche bzw. der Außenkontur des Innenblattabschnittes 2 und der ersten Kante 52 kann größer gewählt werden als der Abstand zwischen der äußeren Fläche bzw. der Außenkontur des Innenblattabschnittes 2 und der zweiten Kante 54.

Das Hinterkantensegment 40 ist an dem Innenblattabschnitt 2 angeordnet. Hierzu weist der als Wickelteil ausgeführte Innenblattabschnitt 2 auf seiner Mantelfläche mehrere Stege 72 auf. Die Stege 72 sind vorzugsweise äquidistant nebeneinander angeordnet. An den Stegen 72 ist das Konturelement 42 angeordnet. Durch die radiale Beabstandung zwischen der äußeren Fläche bzw. der Außenkontur des Innenblattabschnittes 2 und dem Konturelement 42 bildet sich zwischen den Stegen 72 jeweils ein Strömungskanal 70 aus. Der jeweilige Strömungskanal 70 wird durch das Konturelement 42 in Umfangsrichtung begrenzt. Die Strömungskanäle 70 verbinden den schlitzförmigen Lufteinlass 66 fluidleitend mit dem schlitzförmigen Luftauslass 68.

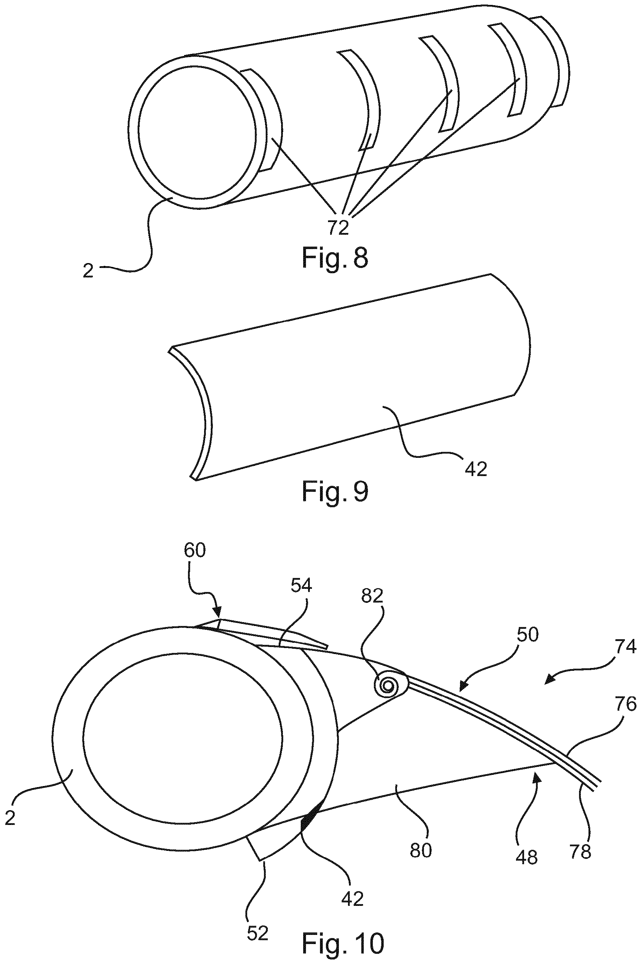

Fig. 10 zeigt ein weiteres Ausführungsbeispiel eines Hinterkantensegmentes 74. Die Darstellung ist dabei vereinfacht gehalten, entspricht aber im Wesentlichen dem in den Fig. 7 bis 9 dargestellten Ausführungsbeispiel. Gemäß diesem Ausführungsbeispiel umfasst das Hinterkantensegment 74 ein Konturelement 42, welches an den Stegen 72 des Innenblattabschnittes 2 angeordnet ist. Weiterhin umfasst das Hinterkantensegment 74 ein als Flächensegment 76 ausgebildetes Profilsegment 44, welches mittels einer in das Innere des Hinterkantensegmentes 74 integrierten Aufwickelvorrichtung 82 aufwickelbar oder von dieser abwickelbar ist. Als ein konturgebendes Mittel ist eine Lattung 78 vorgesehen, auf welcher das ausgezogene Flächensegment 76 aufgespannt wird und dadurch seine tragflächenähnliche Form erhält. Zur Versteifung des Hinterkantensegmentes 74 sind ein oder mehrere als Verbindungselemente ausgeführte Rippenkörper 80 vorgesehen. Die Rippenkörper 80 sind durch einen oder mehrere Befestigungspunkte mit dem Konturelement 42 sowie der Lattung 78 verbunden. Bei vorherrschender Zugbelastung auf dem Flächenelement 76 und Vorspannung der Lattung 78 können die Rippenkörper 80 als Seilabspannung ausgebildet werden.

### Bezugszeichenliste

- 1: Blattwurzel
- 2: Innenblattabschnitt
- 4: Saugseitige Fläche
- 6: Druckseitige Fläche
- 8,8': Segmentabschnitt
- 10: Verbindungsseite
- 12, 12': Rückwärtige Fläche
- 14,14': Erste Kante
- 16, 16': Zweite Kante
- 18, 18': Erster Spalt
- 20, 20': Zweiter Spalt
- 22: Lufteinlass
- 24: Luftauslass
- 26,26': Abdeckelement
- 28, 28': Befestigungsabschnitt
- 30,30': Abdeckabschnitt
- 32: Anströmkante
- 34: Vorderkantenabschnitt
- 36: Gelenk
- 40: Hinterkantensegment
- 42: Konturelement
- 44: Profilsegment
- 46: Rosendornprofil
- 48: Druckseitige Fläche
- 50: Saugseitige Fläche
- 52: Erste Kante
- 54: Zweite Kante
- 56: Erster Spalt
- 58: Zweiter Spalt
- 60: Abdeckelement
- 62: Befestigungsabschnitt
- 64: Abdeckabschnitt
- 66: Lufteinlass
- 68: Luftauslass
- 70: Strömungskanal
- 72: Steg
- 74: Hinterkantensegment
- 76: Flächensegment
- 78: Lattung
- 80: Rippenkörper
- 82: Aufwickelvorrichtung
- 100: Windenergieanlage
- 102: Turm
- 104: Gondel
- 106: Rotor
- 108: Rotorblatt
- 110: Spinner
- 112, 112': Hinterkantensegment
- LS: Luftströmung

## Patentansprüche

1. Rotorblatt (108) für eine Windenergieanlage, mit einem Innenblattabschnitt (2), der sich ausgehend von einer Rotorblattwurzel (1) in Längsrichtung des Rotorblattes (108) erstreckt, einem an dem Innenblattabschnitt (2) angeordneten Hinterkantensegment (40, 74, 112, 112') zur Vergrößerung der Profiltiefe des Rotorblattes (108) entlang eines Abschnittes in Rotorblatt-Längsrichtung,
wobei das Rotorblatt (108) eine druckseitige Fläche (4, 48) und eine saugseitige Fläche (6, 50) aufweist, die jeweils bereichsweise aus Teilen des Innenblattabschnittes (2) und des Hinterkantensegmentes (40, 74, 112, 112') ausgebildet sind,
wobei auf der druckseitigen Fläche (4, 48) und auf der saugseitigen Fläche (6, 50) des Rotorblattes (108) im Bereich des Hinterkantensegmentes (40, 74, 112, 112') jeweils wenigstens ein sich im Wesentlichen in Rotorblatt-Längsrichtung erstreckender Lufteinlass (22, 22', 66) und Luftauslass (24, 68) ausgebildet ist, welche miteinander fluidleitend verbunden sind,
wobei auf der saugseitigen Fläche (6, 50) zumindest ein den wenigstens einen Luftauslass (24, 68) überlappendes Abdeckelement (26, 26', 60) angeordnet ist, durch welches der Luftauslass (24, 68) verschließbar oder freigebbar ist,
**dadurch gekennzeichnet, dass** das Rotorblatt (108) und das zumindest eine Abdeckelement (26, 26', 60) dazu eingerichtet sind, eine Luftströmung (LS) im Bereich des Luftauslasses (24, 68) im Wesentlichen parallel zur jeweils angrenzenden äußeren Oberfläche des Innenblattabschnittes (2) umzulenken.

2. Rotorblatt (108) nach Anspruch 1, **dadurch gekennzeichnet, dass** der wenigstens eine Lufteinlass (22, 22', 66) und Luftauslass (24, 68) durch das Hinterkantensegment (40, 74, 112, 112') fluidleitend miteinander verbunden sind.

3. Rotorblatt (108) nach Anspruch 2, **dadurch gekennzeichnet, dass** das zumindest eine Abdeckelement (26, 26', 60) in Abhängigkeit von einem sich im Inneren des Hinterkantensegmentes (40, 74, 112, 112') aufbauenden Staudruck betätigbar ist.

4. Rotorblatt (108) nach einem der Ansprüche 1 bis 3, **dadurch gekennzeichnet, dass** das zumindest eine Abdeckelement (26, 26', 60) einen ersten Abschnitt (28, 28', 62) aufweist, mit welchem das zumindest eine Abdeckelement (26, 26', 60) an dem Innenblattabschnitt (2) befestigt ist, sowie einen zweiten Abschnitt (30, 30', 64), welcher den wenigstens einen Luftauslass (24, 66) überlappt.

5. Rotorblatt (108) nach Anspruch 4, **dadurch gekennzeichnet, dass** zumindest der zweite Abschnitt (30, 30', 64) des zumindest einen Abdeckelementes (26, 26', 60) biegeelastisch ausgeführt ist.

6. Rotorblatt (108) nach Anspruch 4, **dadurch gekennzeichnet, dass** das zumindest eine Abdeckelement (26') zweiteilig ausgebildet ist.

7. Rotorblatt nach Anspruch 6, **dadurch gekennzeichnet, dass** der erste Abschnitt (28') und der zweite Abschnitt (28') zumindest abschnittsweise durch ein Gelenk (36) miteinander verbunden sind.

8. Rotorblatt (108) nach einem der Ansprüche 1 bis 7, **dadurch gekennzeichnet, dass** das Hinterkantensegment (40, 74, 112, 112') eine erste Kante (14, 14', 52) und eine zweite Kante (16, 16', 54) aufweist, welche die druckseitige Fläche (4, 48) und die saugseitige Fläche (6, 50) des Hinterkantensegmentes (40, 74, 112, 112') begrenzen.

9. Rotorblatt (108) nach Anspruch 8, **dadurch gekennzeichnet, dass** das Hinterkantensegment (112') einen an der ersten Kante (14') angeordneten Vorderkantenabschnitt (34) aufweist, welcher sich abschnittsweise in Umfangsrichtung des Innenblattabschnitts (2) erstreckt.

10. Rotorblatt (108) nach einem der Ansprüche 1 bis 9, **dadurch gekennzeichnet, dass** jeder Lufteinlass (22, 22', 66) und Luftauslass (24, 58) unmittelbar im Übergangsbereich vom Innenblattabschnitt (2) zum Hinterkantensegment (40, 74, 112, 112') ausgebildet ist.

11. Rotorblatt (108) nach einem der Ansprüche 1 oder 10, **dadurch gekennzeichnet, dass** das Hinterkantensegment (40, 74) aus zumindest einem sich abschnittsweise in Umfangsrichtung des Innenblattabschnittes (2) erstreckenden Konturelement (42) und zumindest einem unter einem Winkel zum Konturelement (42) auf der saugseitigen Fläche (6, 50) angeordneten Profilelement (44) gebildet ist.

12. Rotorblatt (108) nach Anspruch 11, **dadurch gekennzeichnet, dass** das Konturelement (42) mittels auf der Oberfläche des Innenblattabschnittes (2) angeordneter Stege (72) zu dieser radial beabstandet befestigbar ist.

13. Rotorblatt (108) nach Anspruch 11 oder 12, **dadurch gekennzeichnet, dass** zwischen dem Konturelement (42) und dem Profilelement (44) zumindest ein Verbindungselement (46, 80) angeordnet beziehungsweise ausgebildet ist.

14. Rotorblatt (108) nach Anspruch 13, **dadurch gekennzeichnet, dass** das zumindest eine Verbindungselement als Rosenprofil (46) ausgeführt ist.

15. Rotorblatt (108) nach Anspruch 11 oder 12, **dadurch gekennzeichnet, dass** das Profilelement (44) als ein mittels einer Aufwickelvorrichtung (82) aufwickelbares Flächensegment (76) ausgebildet ist, welches über einer an dem Konturelement (42) angeordneten Lattung (78) aufspannbar ist.

16. Rotorblatt (108) nach Anspruch 15, **dadurch gekennzeichnet, dass** zwischen der Lattung (78) und dem Konturelement (42) ein oder mehrere Rippenkörper (80) vorgesehen sind.

17. Windenergieanlage (100), mit einem Turm (102), einer Gondel (104) und einem Rotor (106), **gekennzeichnet durch** mindestens ein mit dem Rotor (106) verbundenes Rotorblatt (108) nach einem der Ansprüche 1 bis 16.

18. Windpark mit mehreren Windenergieanlagen (100) nach Anspruch 17.

## Claims

1. A rotor blade (108) for a wind turbine, comprising an inner blade section (2) extending from a rotor blade root (1) in a longitudinal direction of the rotor blade (108), a trailing edge segment (40, 74, 112, 112') arranged on the inner blade section (2) for increasing the profile depth of the rotor blade (108) along a section in the longitudinal direction of the rotor blade,
wherein the rotor blade (108) comprises a pressure-side surface (4, 48) and a suction-side surface (6, 50), each of which is formed in regions from parts of the inner blade section (2) and the trailing edge segment (40, 74, 112, 112'),
wherein at least one air inlet (22, 22', 66) and air outlet (24, 68), which are connected to one another in a fluid-conducting manner, extending essentially in the longitudinal direction of the rotor blade are formed on the pressure-side surface (4, 48) and on the suction-side surface (6, 50) of the rotor blade (108) in the region of the trailing edge segment (40, 74, 112, 112'),
wherein at least one cover element (26, 26', 60) overlapping the at least one air outlet (24, 68) is arranged on the suction-side surface (6, 50), by means of which cover element the air outlet (24, 68) can be closed or opened,
**characterized in that** the rotor blade (108) and the at least one cover element (26, 26', 60) are configured to deflect an air flow (LS) in the region of the air outlet (24, 68) essentially parallel to the respective adjacent outer surface of the inner blade section (2).

2. The rotor blade (108) of claim 1, **characterized in that** the at least one air inlet (22, 22', 66) and air outlet (24, 68) are connected to each other by the trailing edge segment (40, 74,112,112') in a fluid-conducting manner.

3. The rotor blade (108) according to claim 2, **characterized in that** the at least one cover element (26, 26', 60) is operable in dependence of a dynamic pressure building up inside the trailing edge segment (40, 74, 112, 112').

4. The rotor blade (108) according to one of the claims 1 to 3, **characterized in that** the at least one cover element (26, 26', 60) comprises a first section (28, 28', 62) by which the at least one cover element (26, 26', 60) is secured to the inner blade section (2) and a second section (30, 30', 64) overlapping the at least one air outlet (24, 66).

5. The rotor blade (108) according to claim 4, **characterized in that** at least the second section (30, 30', 64) of the at least one cover element (26, 26', 60) is configured to be flexible.

6. The rotor blade (108) according to claim 4, **characterized in that** the at least one cover element (26') is formed in two parts.

7. The rotor blade according to claim 6, **characterized in that** the first section (28') and the second section (28') are interconnected at least in sections by a joint (36).

8. The rotor blade (108) according to one of the claims 1 to 7, **characterized in that** the trailing edge segment (40, 74,112,112') comprises a first edge (14, 14', 52) and a second edge (16, 16', 54) defining the pressure side surface (4, 48) and the suction side surface (6, 50) of the trailing edge segment (40, 74, 112, 112').

9. The rotor blade (108) according to claim 8, **characterized in that** the trailing edge segment (112') comprises a leading edge section (34) arranged at the first edge (14') and extending in sections in the circumferential direction of the inner blade section (2).

10. The rotor blade (108) according to one of the claims 1 to 9, **characterized in that** each air inlet (22, 22', 66) and air outlet (24, 58) is formed directly in the transition region from the inner blade section (2) to the trailing edge segment (40, 74, 112, 112').

11. The rotor blade (108) according to one of the claims 1 or 10, **characterized in that** the trailing edge segment (40, 74) is formed from at least one contour element (42) extending in sections in the circumferential direction of the inner blade section (2) and at least one profile element (44) arranged at an angle to the contour element (42) on the suction-side surface (6, 50).

12. The rotor blade (108) according to claim 11, **characterized in that** the contour element (42) can be secured to and at a radial distance from the surface of the inner blade section (2) by means of webs (72) arranged on that surface.

13. The rotor blade (108) according to claim 11 or 12, **characterized in that** at least one connecting element (46, 80) is arranged or formed between the contour element (42) and the profile element (44).

14. The rotor blade (108) according to claim 13, **characterized in that** the at least one connecting element has a rose profile (46) design.

15. The rotor blade (108) according to claim 11 or 12, **characterized in that** the profile element (44) is configured as a surface segment (76) which can be wound up by means of a winding device (82) and can be stretched over a batten (78) arranged on the contour element (42).

16. The rotor blade (108) of claim 15, **characterized in that** one or more rib bodies (80) are provided between the batten (78) and the contour element (42).

17. A wind turbine (100), comprising a tower (102), a nacelle (104), and a rotor (106), **characterized by** at least one rotor blade (108) connected to the rotor (106) according to one of the claims 1 to 16.

18. A wind farm comprising a plurality of wind turbines (100) according to claim 17.

## Revendications

1. Pale de rotor (108) pour une installation d'énergie éolienne, comprenant une section de pale intérieure (2) qui s'étend à partir d'un pied de pale de rotor (1) dans une direction longitudinale de la pale de rotor (108), un segment de bord de fuite (40, 74, 112, 112') disposé sur la section de pale intérieure (2) pour augmenter la profondeur de profil de la pale de rotor (108) le long d'une section dans la direction longitudinale de la pale de rotor,
dans laquelle la pale de rotor (108) comprend une intrados (4, 48) et une surface extrados (6, 50), qui sont formées chacune par zones à partir de parties de la section de pale intérieure (2) et du segment de bord de fuite (40, 74, 112, 112'),
dans laquelle au moins une entrée d'air (22, 22', 66) et sortie d'air (24, 68) s'étendant essentiellement dans la direction longitudinale de la pale de rotor étant formées sur la surface intrados (4, 48) et sur la surface extrados (6, 50) de la pale de rotor (108) dans la zone du segment de bord de fuite (40, 74, 112, 112'), lesquelles sont reliées entre elles de manière conductrice de fluide,
dans laquelle au moins un élément de recouvrement (26, 26', 60) recouvrant la au moins une sortie d'air (24, 68) étant disposé sur la surface extrados (6, 50), par lequel la sortie d'air (24, 68) peut être fermée ou libérée,
**caractérisé en ce que** la pale de rotor (108) et le au moins un élément de recouvrement (26, 26', 60) sont agencés pour dévier un flux d'air (LS) dans la zone de la sortie d'air (24, 68) essentiellement parallèlement à la surface extérieure respectivement adjacente de la section de pale intérieure (2).

2. Pale de rotor (108) selon la revendication 1, **caractérisée en ce que** l'au moins une entrée d'air (22, 22', 66) et sortie d'air (24, 68) sont reliées entre elles par le segment de bord de fuite (40, 74, 112, 112') de manière conductrice de fluide.

3. Pale de rotor (108) selon la revendication 2, **caractérisée en ce que** l'au moins un élément de recouvrement (26, 26', 60) peut être actionné en fonction d'une pression dynamique qui s'accumule à l'intérieur du segment de bord de fuite (40, 74, 112, 112').

4. Pale de rotor (108) selon l'une des revendications 1 à 3, **caractérisée en ce que** l'au moins un élément de recouvrement (26, 26', 60) comprend une première section (28, 28', 62) par laquelle l'au moins un élément de recouvrement (26, 26', 60) est fixé à la section de pale intérieure (2), et une seconde section (30, 30', 64) qui se superpose à l'au moins une sortie d'air (24, 66).

5. Pale de rotor (108) selon la revendication 4, **caractérisée en ce qu'**au moins la deuxième section (30, 30', 64) de l'au moins un élément de recouvrement (26, 26', 60) est agencée de manière élastique en flexion.

6. Pale de rotor (108) selon la revendication 4, **caractérisée en ce que** l'au moins un élément de recouvrement (26') est agencé en deux parties.

7. Pale de rotor selon la revendication 6, **caractérisée en ce que** la première section (28') et la deuxième section (28') sont reliées entre elles au moins par sections par une articulation (36).

8. Pale de rotor (108) selon l'une des revendications 1 à 7, **caractérisée en ce que** le segment de bord de fuite (40, 74, 112, 112') présente un premier bord (14, 14', 52) et un deuxième bord (16, 16', 54) qui délimitent la surface intrados (4, 48) et la surface extrados (6, 50) du segment de bord de fuite (40, 74, 112, 112').

9. Pale de rotor (108) selon la revendication 8, **caractérisée en ce que** le segment de bord de fuite (112') présente une section de bord d'attaque (34) disposée sur le premier bord (14'), qui s'étend par sections dans la direction circonférentielle de la section de pale intérieure (2).

10. Pale de rotor (108) selon l'une des revendications 1 à 9, **caractérisée en ce que** chaque entrée d'air (22, 22', 66) et sortie d'air (24, 58) est agencée directement dans la zone de transition entre la section de pale intérieure (2) et le segment de bord de fuite (40, 74, 112, 112').

11. Pale de rotor (108) selon l'une des revendications 1 ou 10, **caractérisée en ce que** le segment de bord de fuite (40, 74) est formé d'au moins un élément de contour (42) s'étendant par sections dans la direction circonférentielle de la section de pale intérieure (2) et d'au moins un élément profilé (44) disposé sous un angle par rapport à l'élément de contour (42) sur la surface extrados (6, 50).

12. Pale de rotor (108) selon la revendication 11, **caractérisée en ce que** l'élément de contour (42) peut être fixé au moyen de nervures (72) disposées sur la surface de la section de pale intérieure (2) à un espacement radial de celle-ci.

13. Pale de rotor (108) selon la revendication 11 ou 12, **caractérisée en ce qu'**au moins un élément de liaison (46, 80) est disposé ou formé entre l'élément de contour (42) et l'élément profilé (44).

14. Pale de rotor (108) selon la revendication 13, **caractérisée en ce que** l'au moins un élément de liaison est agencé sous forme de profil d'une épine en rose (46).

15. Pale de rotor (108) selon la revendication 11 ou 12, **caractérisée en ce que** l'élément profilé (44) est agencé sous forme d'un segment de surface (76) pouvant être enroulé au moyen d'un dispositif d'enroulement (82), qui peut être tendu au-dessus d'un lattage (78) disposé sur l'élément de contour (42).

16. Pale de rotor (108) selon la revendication 15, **caractérisée en ce qu'**un ou plusieurs corps de nervure (80) sont prévus entre le lattage (78) et l'élément de contour (42).

17. Eolienne (100), comprenant une tour (102), une nacelle (104) et un rotor (106), **caractérisée par** au moins une pale de rotor (108) reliée au rotor (106) selon l'une des revendications 1 à 16.

18. Parc éolien comprenant plusieurs éoliennes (100) selon la revendication 17.
